# EUROPEAN PATENT APPLICATION

(11) **EP 1 077 318 A1**
(43) Date of publication of application: **21.02.2001**
(21) Application number: 00306942.4
(22) Date of filing: 14.08.2000
(51) Int. Cl.: F02B 63/04, F02B 71/04, H02K 7/18

(54) **Power generator**

(30) Priority: 19.08.1999 GB 9919519
(71) Applicant: Dawson, Richard Frederick, Sutton, Surrey SM1 4BX (GB)
(72) Inventor: Dawson, Richard Frederick, Sutton, Surrey SM1 4BX (GB)
(74) Representative: Hughes, Brian Patrick

(57) **Abstract**

A power generator comprising a bank of four cylinders, 12, 14, 16 and 18, arranged as two opposed pairs, the pistons 12P, 14P, 16P and 18P being connected together to move in unison along parallel axes, and an electrical generator comprising a magnetic field generating means 30 and an armature winding 26 in which the generating means 30 reciprocates in unison with the pistons.

## Description

This invention relates to a reciprocating, internal combustion power generator.

Internal combustion engines operate by transforming reciprocating motion into rotating motion, and the majority utilise a four stroke cycle where every fourth stroke is an ignition or power stroke and the energy for the execution of the other three strokes (induction, compression and exhaust) is provided by the phased firing of other pistons on a common crankshaft, a flywheel being mounted on a crankshaft to smooth out fluctuations in the engine speed.

The present invention dispenses with the crankshaft, and a preferred embodiment of the invention has four pistons joined in two pairs end to end on common connecting rods which are cross-connected in an H configuration. The four pistons operate in sequence.

Electrical power is obtained from a centrally mounted electrical generator, in this case a simple permanent magnet/field winding arrangement.

Electrical power is developed as the pistons reciprocate to and fro, the varying frequency and voltage being regulated by a modern easily manufactured thyristor control system.

When used in a motor vehicle the present invention could be used to power a hybrid vehicle with an alternative accumulator/battery supply and small electric motors on each wheel.

The invention overcomes the need to convert the generated energy from reciprocating into rotary, into electrical and back into rotary.

The present invention is a power generator comprising a bank of four cylinders arranged as two opposed pairs, the pistons being connected together to move in unison along parallel axes, and an electrical generator comprising a magnetic field generating means and an armature winding in which the generating means reciprocates in unison with the pistons.

The four cylinders may be arranged in an H configuration.

Preferably the power generator includes a second electrical generator comprising a magnetic field generating means and an armature winding in which the generating means reciprocates in unison with the pistons.

Preferably the cylinders operate on a four stroke cycle, each cylinder being on a different stroke at any given time.

The power generator may include one or more additional banks of four cylinders which are interconnected so that the pistons of all the cylinders move in unison.

An embodiment of the present invention will now be described, by way of example, with reference to the accompanying drawing, in which:-
Fig. 1 is a side elevation of a generator according to the present invention; and
Fig. 2 is a plan view of the generator of Fig. 1.

Referring now to the drawings, a generator 10 according to the present invention comprises a bank of four internal combustion cylinders 12, 14, 16 and 18 arranged in an H configuration and secured to a common mounting (not illustrated). The cylinders 12 and 14 constitute a first opposed pair and are aligned, their pistons 12P and 14P being interconnected by a common piston rod 20. The cylinders 16 and 18 constitute a second opposed pair and are similarly aligned, their pistons 16P and 18P being interconnected by a common piston rod 22. The piston rods 20 and 22 are interconnected between the cylinders by a bridge 24, so that the four pistons reciprocate in unison along parallel axes.

Two electrical armature windings 26 and 28 are secured to the common mounting, the winding 26 being located between the cylinders 12 and 16 and the winding 28 being located between the cylinders 14 and 18. The windings 26 and 28 have associated therewith respective magnetic field generating means which, in this embodiment, comprises permanent magnets 30 and 32. The magnets 30 and 32 are carried by a respective supports 38 and 40 which are cantilevered from the bridge 24. Each combination of an armature winding and a field generating means constitutes an electrical generator.

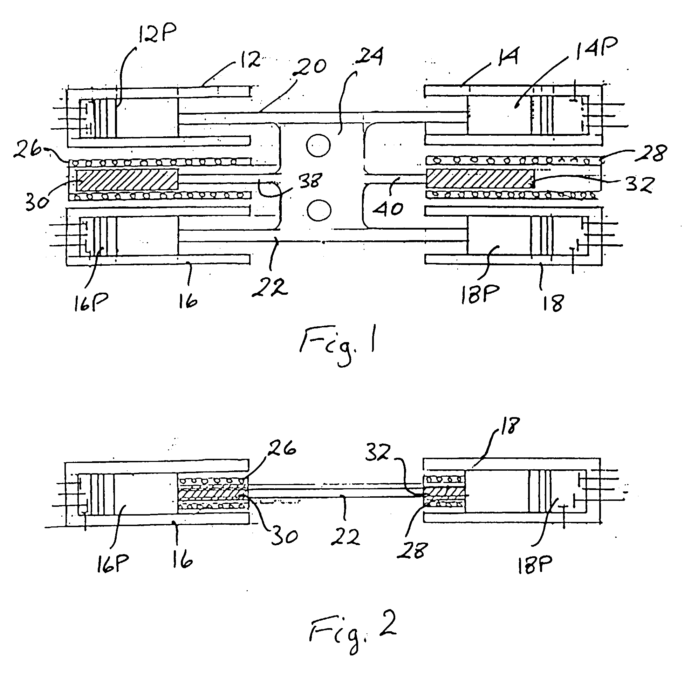

The cylinders in this embodiment are four stroke cylinders, and, as can be seen from Fig. 1, the pistons 12P and 16P are at top dead centre while the pistons 14P and 18P are at bottom dead centre. More specifically, the piston 12P is at the start of its ignition stroke, the piston 14P is at the start of its compression stroke, the piston 16P is at the start of its induction stroke and the piston 18P is at the start of its exhaust stroke. Thus the four cylinders fire in sequence and cause their pistons, the bridge 24, the supports 38 and 40 and the magnets 30 and 32 to reciprocate as a unit. As the magnets 30 and 32 reciprocate inside their respective armature windings they induce a sinusoidal voltage in each winding. In this embodiment the windings are connected in series to add the induced voltages, but they could be connected in parallel to allow for increased current at the common voltage.

The embodiment described has the bank of four cylinders and the armature windings essentially in a common plane though other arrangements of the cylinders and windings are possible and may be preferred in some circumstances. If additional power is required then the embodiment described may be modified by adding additional banks of cylinders suitably angled with respect to the first hank and also connected to the bridge 24. The additional banks of cylinders may have, but do not need to have associated armature windings and field generating means.

The embodiment described may be modified by substituting energised field coils for the permanent magnets 30 and 32.

The electrical power taken from the generators can readily be controlled by a thyristor control system.

A power generator according to the present invention is particularly useful in a hybrid vehicle driven by electrical motors and having a battery connected to the output of the generator and to the drive motors. The "flat" design of the embodiment described makes it suitable for being located beneath the floor of a vehicle.

## Claims

1. A power generator comprising a bank of four cylinders arranged as two opposed pairs, the pistons being connected together to move in unison along parallel axes, and an electrical generator comprising a magnetic field generating means and an armature winding in which the generating means reciprocates in unison with the pistons.

2. A power generator as claimed in claim 1, in which the four cylinders are arranged in an H configuration.

3. A power generator as claimed in claim 1 or claim 2, including a second electrical generator comprising a magnetic field generating means and an armature winding in which the generating means reciprocates in unison with the pistons.

4. A power generator as claimed in any preceding claim, in which the cylinders operate on a four stroke cycle, each cylinder being on a different stroke at any given time.

5. A power generator as claimed in any preceding claim, including one or more additional banks of four cylinders which are interconnected so that the pistons of all the cylinders move in unison.
